(19)

Europäisches
Patentamt
European
Patent Office
Office européen
des brevets

(11) **EP 1 950 242 A1**

(12) **EUROPEAN PATENT APPLICATION**

(43) Date of publication:
**30.07.2008 Bulletin 2008/31**

(51) Int Cl.:
***C08L 23/10*** *(2006.01)*

(21) Application number: **07001397.4**

(22) Date of filing: **23.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Borealis Technology Oy
06101 Porvoo (FI)**

(72) Inventors:
• **Stockreiter, Wolfgang
  4048 Puchenau (AT)**
• **Gahleitner, Markus
  4501 Neuhofen/Krems (AT)**

(74) Representative: **Grünecker, Kinkeldey,
Stockmair & Schwanhäusser
Anwaltssozietät
Leopoldstrasse 4
80802 München (DE)**

(54) **Hybrid composites**

(57) The present invention concerns a novel polymer composition comprising a specific combination of reinforcing agents. Due to the combination of inorganic reinforcing agents and organic reinforcing agents polymer compositions with a unique balance of properties can be obtained.

EP 1 950 242 A1

**Description**

The present invention relates to hybrid composites of polyolefins with organic and inorganic reinforcing agents.

Prior Art

Polypropylene is an important material being used over a broad variety of applications. In particular polypropylene compositions with reinforcing agents are employed in view of the improvements achievable therewith with respect to mechanical properties, such as impact properties and heat resistance with or without applied load. Such reinforced polypropylene compositions are used for automotive parts as well as for electric and electronic components as well as household articles.

In the art it is for example known to add either inorganic reinforcing agents in the shape of fibres or particles, such as glass fibers, talc, wollastonite, etc, or organic reinforcing agents, typically in the shape of fibres, such as PET fibres and polyamide fibres.

GB 1132060 describes polyolefin-based materials for packaging purposes, reinforced with fibrous additives, selected among polyester materials and polyamide materials. US 3639424 describes extrudable plastic compositions reinforced with heat set polyester fibres. JP-A-63-027550 describes moulded articles reinforced with a polyester fibre. All these documents describe that the polymer material to be reinforced may be selected among polyolefins, and as far as problem polymers are concerned these documents primarily refer to homopolymers. However, also copolymers of propylene with other comonomers are mentioned in the prior art.

Other examples of compositions comprising polypropylenes and polyester fibres are discussed in the Journal of Polymer materials, 9,1992, pages 235 to 240, referring to the production and properties of short polyester fibres filled polypropylene compositions while the German patent application DE 10229298 A1 discloses compositions prepared by adding polymer filaments to a polypropylene within an extruder.

Finally, the German Patent Application DE 19934377 A1 discloses a process for the preparation of polypropylene compounds being reinforced with polyester fibres and this German patent application describes that such a fibre reinforcement improves in particular impact properties as well as toughess of the obtained compounds. However, subsequent evaluations of such compounds as disclosed in Kunststoffe 92(2002), pages 97 and 98 describe that tensile properties cannot be improved with the addition of short PET fibres, so that the improvement as indicated in the German patent application DE 19934377 A1 appears not to be reproducible. With respect to the polypropylene materials employed in the above discussed prior art references same refer exclusively to polypropylene materials produced using single site metallocene catalysts.

The international patent application WO 00/520924 finally describes that polypropylene materials may also be compounded with inorganic filler materials, such as talc, wollastonite, clay, mica, glass or mixtures thereof.

The drawback of the prior art compositions however lies in the fact that a desired balance of properties, in particular a good balance of tensile properties and impact properties cannot be achieved. While mechanical strength and heat resistance can be improved by using a glass fiber reinforcement, the obtained compositions do suffer from a lack of extensibility, a limited surface quality and the formation of slag-like residues in combustion or pyrrolosis. On the other hand, reinforcement of polypropylene with organic fibres, such as PET fibres cannot provide the desired balance of properties either, so that further improvements are still desired.

Object of the present invention

Accordingly it is the object of the present invention to provide a polypropylene composition, displaying a superior balance of properties, in particular tensile and impact properties. The compositions furthermore should preferably display a suitable extensibility and a suitable stiffness range, so that the use of the compositions for the preparation of automotive parts etc. is possible. At the same time surface quality should not suffer and preferably the formation of slag-like residues in combustion or pyrrolosis should be avoided as much as possible.

Brief description of the present invention

The present invention shows the above object by providing the polymer compositions as defined in claim 1. Preferred embodiments are described in claims 2 to 10. The present invention furthermore provides a process for preparing the polymer composition in accordance with the present invention as defined in claim 11 as well as the use of the polymer composition for the preparation of moulded articles, in particular automotive parts as defined in claims 12 and 13. Further embodiments of the invention are described in the specification and are illustrated by the examples.

## Detailed description of the present invention

The present invention provides a polymer composition, comprising

a) an inorganic reinforcing agent,

b) an organic reinforcing agent, and

c) a high impact polypropylene composition.

The central components of the polymer composition in accordance with the present invention are further described below.

## Inorganic reinforcing agent

The inorganic reinforcing agent is selected from inorganic materials, which maybe used singly or in any desired mixture, which may have a shape selected from fibres, particles, platelets, etc. Suitable inorganic reinforcing agents are characterized by an aspect ratio, defined as the ratio between the biggest and the smallest average dimensions of the reinforcing particles, of at least 5, preferably at least 10. Suitable aspect ratios are from 5 to 500, such as from 10 to 500. Typical examples thereof are glass or mineral fibres, talc, mica, wollastonite, halloysite, montmorillonite as well as clays in general and other phyllosilicate minerals. Preferred in accordance with the present invention are glass fibers, talc and wollastonite and the glass fibres typically are non-endless cut glass fibres.

The inorganic reinforcing agents preferably display a top-cut particle size according to ISO 787-7 of 10 $\mu$m or less, preferably 8 $\mu$m or less. Preferred are reinforcing agents with a weight average particle size according to ISO 13317-1 of 5 $\mu$m or less, preferably 3 $\mu$m or less.

The inorganic reinforcing agent is added to the polymer composition as claimed and described herein based on the total weight of some of the components a), b) and c), as defined herein, in an amount of from 2 to 30 wt%, preferably 5 to 25 wt%, and typically 10 to 20 wt%. As indicated above, it is possible to employ one type of inorganic reinforcing agents although the present invention also contemplates the use of mixtures of more than one inorganic reinforcing agent.

Preferred examples of specific inorganic reinforcing agents and suitable additional amounts are glass fibres, which are typically added in amounts of from 5 to 25 wt%, typically about 10 wt%, as well a talc or wollastonite, added typically in amounts from 5 to 25 wt%, such as 10 to 20 wt%.

In accordance with the present invention the type of inorganic reinforcing agent can be selected in order to adjust the mechanical properties, in particular the mechanical strength. In this respect the isotropic properties of the inorganic reinforcing agents are relevant and accordingly mechanical properties, in particular mechanical strength can be increased by increasing the isotropic properties of the inorganic reinforcing agent, by appropriately selecting the type of the inorganic reinforcing agent.

## Organic reinforcing agent

The organic reinforcing agents to be employed in accordance with the present invention typically are fibres of high melting polymers, such as polyester materials and polyamide materials. Preferred organic reinforcing agents to be employed in accordance with the present invention are in particular PET fibres, TBT fibres, PEN fibres, PCT fibres or high molecular weight polyamide fibres, including amide fibres, etc. Also suitable are short cut carbon fibres. Preferred in accordance with the present invention are in particular short fibres and with respect to the mechanical nature of these fibres in particular are preferred polyester fibres, an illustrative example thereof being PET fibres.

Suitable organic reinforcing agents are characterized by an aspect ratio, defined as the ratio between the biggest and the smallest average dimensions of the reinforcing agents, of more than 100, preferably more than 150. Suitable aspect ratios are from 100 to 500, such as from 200 to 500.

The term non-endless or short cut fibres as employed herein typically refers to fibres having a length of below 20 mm, preferably below 10 mm, and typical examples are fibre lengths in the range of from 3 to 8 mm, such as from 4 to 6 mm. The fibres to be employed furthermore typically show a fibre titer of from 2 to 10 dtex, typically about 4 to 6 dtex. Preferred fibres have a circular cross section of about 10 to 40 $\mu$m, preferably 15 to 30 $\mu$m, such as from 20 to 25 $\mu$m.

These organic reinforcing agents may be employed singly in a polymer composition in accordance with the present invention but the present invention also contemplates the use of two or more organic reinforcing agents in a combination.

The organic reinforcing agents are typically employed in the polymer composition of the present invention in amounts of from 2 to 30 wt%, preferably 5 to 25 wt% and in particular about 10 wt%, based on the overall weight of the sum of components a), b) and c) as defined above. Illustrative examples of organic reinforcing agents and additional amounts are in particular short PET fibres which are added in an amount of about 10 wt%.

High impact polypropylene compositions

The propylene polymer to be employed in the polymer composition in accordance with the present invention is a high impact polypropylene composition, which includes block copolymers, heterophasic compositions in the form of reactor blends as well as blends of polypropylene containing other polymers like polyethylene homo- or copolymers or ethylene-propylene rubbers, prepared by compounding. In particular preferred in accordance with the present invention are heterophasic propylene polymer compositions, in particular reactor blends prepared by sequential polymerization, which may be described as propylene polymers comprising a matrix phase comprising a propylene homopolymer and/or a propylene copolymer with at least about 80 wt%. of propylene and up to 20 wt% of ethylene and/or a further α-olefin with 4 to 12, preferably 4 to 8 carbon atoms, and a disperse phase comprising an ethylene rubber copolymer with 20 wt% of more of ethylene and up to 80 wt% of propylene and/or a further α-olefin with 4 to 12, preferably 4 to 8 carbon atoms. The preferred comonomer for the matrix phase is ethylene or 1-butene, in particular ethylene, while the preferred comonomer for the dispersed phase is propylene. Accordingly the dispersed phase can be described as an ethylene-propylene-rubber (EPR).

The composition of the high impact propylene ethylene copolymer to be employed in accordance with the present invention, i.e. the relative amounts of matrix phase and dispersed phase, and its further properties, such as melt-flow rate, comonomer content, comonomer distribution, molecular weight distribution etc. may be selected in accordance with the desired and application. Typically however the matrix phase amounts to 50 to 98 wt% of the heterophasic composition and the dispersed phase amounts to 2 to 50 wt% of the heterophasic composition. Suitable ranges are also 70 to 95, preferably 75 to 85 wt% matrix phase and 5 to 30, preferably 15 to 25 wt% dispersed phase. The amount of dispersed phase, i.e. elastomer content, may be determined in accordance with procedures known to the skilled person, such as determining the xylene soluble fraction at 23°C. Representative examples of such high impact copolymers to be employed in accordance with the present invention are disclosed in the European Patent Applications of BOREALIS, such as EP 1354901 A1, EP 1344793 A1 and EP 1702956 A3, incorporated herein by reference.

As outlined above, the heterophasic propylene copolymer to be employed in accordance with the present invention may be prepared in any suitable manner known to the skilled person in the art, including mechanical blending processes as well as, preferably, sequential polymerization processes. In this respect, it is also possible to prepare the matrix phase by suitable sequential polymerization processes, while the dispersed phase then can either be introduced by blending processes or by a further polymerization carried out in the presence of the already polymerized matrix phase.

According to a preferred embodiment of the present invention, the heterophasic propylene copolymer is a reactor made heterophasic propylene polymer. Reactor made heterophasic propylene copolymer means herein a reaction product which is obtained from a polymerization reaction sequentially polymerizing the different components of the heterophasic propylene copolymer. In this respect, any polymerization method, including solution, slurry and bulk polymerization or gas phase polymerization can be used, in any desired order. Bulk polymerization defines in the present application a polymerization in a reaction medium comprising at least 60 wt% of monomer.

In the following, a preferred process for preparing first the matrix phase of the heterophasic propylene copolymer is described, followed by a description of a further preferred embodiment also including the preparation of the dispersed phase.

When the matrix is unimodal with respect to the molecular weight distribution and comonomer distribution, it may be prepared in a single stage process e.g. as bulk, slurry or gas phase process in a stirred tank, loop or gas phase reactor. Preferably, the unimodal matrix is polymerised as a slurry or bulk polymerisation. Alternatively, the unimodal matrix may be produced in a multistage process using at each stage process conditions which result in similar polymer properties.

The matrix phase of the heterophasic propylene copolymer to be used in accordance with the present invention may be prepared by polymerizing, in a bulk reactor, for example a loop reactor, propylene monomers optionally together with one or more comonomers, in the presence of a polymerization catalyst to produce the matrix phase of the heterophasic propylene copolymer. The obtained product is then transferred to a subsequent gas phase reactor to polymerize the dispersed phase, in a manner known to the skilled person. Such a process can be carried out using any suitable catalyst for the preparation of propylene monomers, including. Preferably, the process as discussed above is carried out using a Ziegler-Natta catalyst, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound.

Suitable catalysts are in particular disclosed in US 5,234,879, WO 92/19653, WO 92/19658 and WO 99/33843, incorporated herein by reference.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0887379 A1 and WO 92/12182, incorporated herein by reference.

The high impact copolymer to be employed in accordance with the present invention typically amounts to at least 65 wt% preferably at least 67 wt% and more preferably from 68.5 up to 90 wt%, based on the total weight of the sum of components a), b) and c).

Optional components

The polymer composition in accordance with the present invention my comprise optional components, such as additives, including stabilizers, nucleating agents, lubricating agents, colorants, etc., as well as compatibilizers in order to improve the adhesion between the reinforcing agents and the high impact copolymer. A typical example of a compatibilizer is a propylene homo- or copolymer grafted with functional groups, in particular acid groups and/or acid anhydride groups. Characteristic examples are polypropylenes grafted with maleic anhydride or acrylic acid. These additives may be employed in usual amounts and typical amounts for the addition of the compatibilizer are in particular from 0.5 to 5 wt%, preferably 1 to 2 wt%, and in particular about 1.5 wt%, based on the overall weight of the polymer composition.

The Hybrid composites in accordance with the present invention may provide suitable melt flow properties for the further use by moulding processes, including injection moulding etc. MFR values may be adjusted, by selecting the type and amount of each of the essential components a) to c) to a range of from typically 5 to 30, preferably 7 to 20 (190°C, 5kg, g/10min). These composites display an improved balance of properties, in particular tensile and impact properties, such as a combination of a Tensile Modulus of above 2300 MPa and Charpy impact values at +23°C and -20°C of 10 or more and 6 or more, respectively. Since the density of the composites in accordance with the present invention are suitably low, typically within the range of 1050 kg/m$^3$ or less, more preferably 970 kg/m$^3$ or less, the density standardized Modulus (relative tensile modulus normalized by the composition density) for the composites in accordance with the present invention is highly favorable, typically at least 2500 x 10$^3$ and preferably 2700 x 10$^3$ m$^2$/s$^2$ or more, another measure for the superiority of the composites in accordance with the present invention.

The polymer composition in accordance with the present invention may be prepared by compounding the components within suitable devices for preparing polymeric compounds, including in particular extruders, including single screw extruders as well as twin screw extruders. The process parameters dependent upon the components to be compounded and may be selected by the skilled person based on the general knowledge concerning polymer processing.

The polymer composition in accordance with the present invention displays a superior balance of properties, namely the polymer composition in accordance with the present invention is a thermoplastic, extrudable and mouldable compound providing the final article to be produced with high stiffness, high elongation at break and high impact strength, at ambient temperature as well as at sub-zero temperatures.

Due to the improved balance of properties as obtained with the polymer composition in accordance with the present invention it is possible to employ this polymer composition in particular for preparing moulded articles which are subjected to demanding conditions, such as structural parts, including automotive parts, appliance parts, pipes, fittings, electric and electronic parts as well as household articles.

The following examples illustrate the present invention.

Examples:

The reinforcing agents and compatibilizers as indicated in table 1 were compounded with a high impact propylene ethylene copolymer (base) and the properties as outlined in tables 1 and 2 were determined. The compositions were prepared using a Collin 50 twin screw extruder with melt temperatures of 200 to 240°C, followed by cooling and solidifying the extrudate using a water bath, followed by pelletizing.

Table 1

| Ex./CE. Number | Organic fibre | | Inorg.reinforcement | | Compat. - | MFR 190°C/5kg | Density - |
|---|---|---|---|---|---|---|---|
| | type - | amount wt% | Type - | Amount wt% | wt% | G/10min | kg/m$^3$ |
| **Ex.1** | PET 698 | 10 | GF | 10 | 1,5 | 7,7 | 950 |

(continued)

| Ex./CE. Number | Organic fibre type - | amount wt% | Inorg.reinforcement Type - | Amount wt% | Compat. - wt% | MFR 190°C/5kg G/10min | Density - kg/m³ |
|---|---|---|---|---|---|---|---|
| Ex.2 | PET 699 | 10 | GF | 10 | 1,5 | 7,3 | 950 |
| Ex.3 | PET 698 | 10 | Talc | 10 | 1,5 | 9,9 | 940 |
| Ex.4 | PET 698 | 10 | Talc | 20 | 1,5 | 7,2 | 1010 |
| Ex.5 | PET 698 | 10 | Wollast. | 10 | 1,5 | 6,5 | 940 |
| Ex.6 | PET 699 | 10 | Wollast. | 10 | 1,5 | 9,2 | 940 |
| CE.1 | none | 0 | none | 0 | 0 | 18 | 920 |
| CE.2 | none | 0 | GF | 10 | 1,5 | 11,4 | 945 |
| CE.3 | PET 698 | 10 | none | 0 | 1,5 | 8,7 | 925 |

Table 2

| Ex./CE. Number | Tensile test Modulus MPa | Ext.Break % | Str.Break MPa | Charpy ISO179 1eA+23°C kJ/m² | 1eU -20°C kJ/m² | Rel.modulus (Mod./dens.) $10^3 m^2/s^2$ |
|---|---|---|---|---|---|---|
| Ex.1 | 2960 | 5,2 | 42,6 | 10,7 | 23 | 3116 |
| Ex.2 | 3200 | 4,8 | 47,9 | 10,1 | 28 | 3368 |
| Ex.3 | 2570 | 7,8 | 30,0 | 8,1 | 10 | 2734 |
| Ex.4 | 2970 | 5,3 | 30,9 | 7,8 | 9,4 | 2941 |
| Ex.5 | 2620 | 11,6 | 28,5 | 11,1 | 12,0 | 2787 |
| EX.6 | 2500 | 10,8 | 29,0 | 8,9 | 10,1 | 2660 |
| CE.1 | 1850 | n.d. | n.d. | 3,2 | 35 | 2011 |
| CE.2 | 3380 | 4,1 | 45,9 | 5,2 | 29 | 3577 |
| CE.3 | 2070 | 19,9 | 28,2 | 9,1 | 12 | 2238 |

| Reinforcement types | | Combatibiliser: Epolene G 3003 (PP-g-MAH) Length/$\mu$m | Diam./$\mu$m | aspect ratio |
|---|---|---|---|---|
| PET 698 | Invista PET type 698 | 4400 | 22 | 200 |
| PET 699 | Invista PET type 699 | 4400 | 22 | 200 |
| GF | Vetrotex EC13 P968 glass | 6000 | 13 | 461 |
| Talc | Tital15 | 2 | 0,2 | 10 |
| Wollast. | Wollast. Nyglos 8 (NYCO) | 152 | 8 | 19 |
| Base | BG055AI | | | |

- BG055AI (commercially available from Borealis Polyolefine GmbH, Austria) is a nucleated high crystallinity PP impact copolymer with MFR (230°C/2,16kg) of 22 g/10min, an elastomer content of 18 wt%, as determined by the amount of xylene solubles (XS) and a density of 920 kg/m³

- The compatibiliser, Epolene G 3003 (commercially available from Eastman Chemical, TX, USA), is a maleic anhydride grafted polypropylene with a weight average molecular weight of 47 kg/mol, a maleic anhydride content of 1,31 wt% and a density of 910 kg/m³

- PET 698 is a shortcut polyester (PET) fiber (type 713) with a circular cross section of 22 $\mu$m diameter, corresponding to a fibre titer of 5,5 dtex, and 4,4 mm length which are specially surface coated for PP (commercially available from Invista, Germany)

- PET 699 is a heat reated shortcut polyester (PET) fiber (type 713) with reduced shrinkage; it has a circular cross section of 22 $\mu$m diameter, corresponding to a fibre titer of 5,5 dtex, and 4,4 mm length which are specially surface coated for PP (commercially available from Invista, Germany)

- Tital 15 (commercially available from Ankerpoort NV, Netherlands) is a jet-milled talc having a top-cut particle size of 7 $\mu$m (95% of particles below that size, according to ISO 787-7) and a weight average particle size of 2 $\mu$m as determined according to ISO 13317-1

- Nyglos 8 (commercially available from NYCO Minerals Inc., NY, USA) is a fine-milled wollastonite with a bulk density of 220 kg/m$^3$, a D50 diameter of 8 $\mu$m (as determined from electron microscopy) and an aspect ratio of 19:1 which is surface coated for use in polymers

- Vetrotex EC13 P968 (commercially available from Saint-Gobain Vetrotex International, Germany) is a short-cut glass fibre with 13 $\mu$m fibre diameter and 6 mm length which is surface coated for use in polymers

The following test methods were employed to determine the properties of the materials in the above table:

- Melt flow rate (MFR): Determined according to ISO 1133 at 190°C with a load of 5kg.

- Tensile test: All parameters determined according to ISO 527, determined on dogbone shape injection moulded specimens of 4 mm thickness as described in EN ISO 1873-2.

- Charpy impact strength: Determined on injection moulded bars of 80 x 10 x 4 mm$^3$ according to ISO 179 1eA (notched) and ISO 179 1eU (unnotched).

- Density: Determined according to ISO 1183.

- Xylene solubles (XS) content: For the determination of the XS fraction, 2.0 g of polymer is dissolved in 250 ml of p-xylene at 135°C under stirring. After 30 $\pm$ 2 min the solution is allowed to cool for 5 min at ambient temperature and then allowed to settle for 30 min at 25 $\pm$ 0.5°C. The solution is filtered with a paper filter into two 100 ml flasks. The solution in the first 100 ml flask is evaporated in nitrogen flow and the residue is dried under vacuum at 90°C until constant weight is reached. The xylene soluble (XS) fraction is then calculated using the following equation:

$$XS\ [\%] = (100\ m_1\ v_0)\ /\ (m_0\ v_1)$$

wherein $m_0$ is the initial polymer amount [g], $m_1$ is the weight of the residue [g], $v_0$ is the initial volume [ml] and $v_1$ the volume of the analysed sample [ml].

The results of the evaluation clearly demonstrate the surprising improvements obtained with the composites in accordance with the present invention, employing a combination of organic and inorganic reinforcing agents.

**Claims**

1. Polymer composition, comprising

   a) at least one inorganic reinforcing agent,
   b) at least one organic reinforcing agent, and
   c) a high impact polypropylene composition.

2. Polymer composition in accordance with claim 1, wherein the at least one inorganic reinforcing agent is selected among glass fibres, talc, mica or wollastonite.

3. Polymer composition in accordance with claim 1 or 2, wherein the organic reinforcing agent is selected among PET fibres, PBT fibres, PEN fibres, PCT fibres, arimide fibres or polyamide fibres.

4. Polymer composition in accordance with any one of claims 1 to 3, wherein the high impact polypropylene composition is a heterophasic polypropylene copolymer with an elastomer content of from 2 to 50 wt% determined as the xylene soluble fraction at 23°C.

5. Polymer composition in accordance with any one of claims 1 to 4, having an MFR according to ISO 1133 and determined at 190°C and 5 kg load of from 5 to 30 g/10 min, preferably 7 to 20 g/10 min.

6. Polymer composition in accordance with any one of claims 1 to 5, wherein the at least one inorganic reinforcing agent is present in an amount of from 2 to 30 wt%, based on the total weight of components a), b) and c).

7. Polymer composition in accordance with any one of claims 1 to 6, wherein the at least one organic reinforcing agent is present in an amount of from 2 to 30 wt%, based on the total weight of components a), b) and c).

8. Polymer composition in accordance with any one of claims 1 to 7, wherein the inorganic reinforcing agent is selected from cut glass fibres, talc and wollastonite and wherein the organic reinforcing agent is a PET or PEN fibre.

9. Polymer composition in accordance with any one of claims 1 to 8, wherein the average aspect ratio of the inorganic reinforcing agent is in the range of from 5 to 500, and the average aspect ratio of the organic reinforcing agent is in the range of from 100 to 500.

10. Polymer composition in accordance with any one of claims 1 to 9, wherein the composition has a relative tensile modulus normalized by the composition density of at least $2500 \times 10^3$ $m^2/s^2$

11. Process for preparing a polymer composition in accordance with any one of claims 1 to 10, comprising mixing components a), b) and c) in accordance with any one of claims 1 to 10 and extruding the mixture of components a), b) and c).

12. Use of the polymer composition in accordance with any one of claims 1 to 10 for preparing injection moulded, blow moulded or extruded articles.

13. Use in accordance with claim 12, wherein the moulded article is an automotive part or appliance part, a pipe or a fitting.

## EUROPEAN SEARCH REPORT

**European Patent Office**

| Application Number |
|---|
| EP 07 00 1397 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2006 0105956 A (MIJU ENGINEERING CO LTD [KR]; CHO GEUN HAENG [KR]; CHUN HEOUGN JAE [KR] 12 October 2006 (2006-10-12) * abstract * | 1-13 | INV. C08L23/10 |
| X | WO 2006/125039 A (EXXONMOBIL RES & ENG CO [US]; LUSTIGER ARNOLD [US]; VALENTAGE JEFFREY) 23 November 2006 (2006-11-23) * the whole document * | 1-13 | |
| X | US 6 077 907 A (RAETZSCH MANFRED [AT] ET AL) 20 June 2000 (2000-06-20) * the whole document * | 1-13 | |
| A | WO 2006/112599 A (KARAM TECH CO LTD [KR]; SEO DUCK-HYUN [KR]) 26 October 2006 (2006-10-26) * the whole document * | 1-13 | |
| A | US 4 845 169 A (ABU-ISA ISMAT A [US] ET AL) 4 July 1989 (1989-07-04) * the whole document * | 1-13 | TECHNICAL FIELDS SEARCHED (IPC) |
| A | WO 01/81074 A (BOREALIS GMBH [AT]; GAHLEITNER MARKUS [AT]; FIEBIG JOACHIM [AT]; WOLFS) 1 November 2001 (2001-11-01) * the whole document * | 1-13 | C08L |
| D,A | US 3 639 424 A (GRAY THEODORE F JR ET AL) 1 February 1972 (1972-02-01) * the whole document * | 1-13 | |
| D,A | DE 102 29 298 A1 (THUERINGISCHES INST TEXTIL [DE]) 15 January 2004 (2004-01-15) * the whole document * | 1-13 | |

The present search report has been drawn up for all claims

| Place of search | Date of completion of the search | Examiner |
|---|---|---|
| Munich | 18 June 2007 | Van Golde, Lambertus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 1397

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2007

| Patent document cited in search report | Publication date | Patent family member(s) | | Publication date |
|---|---|---|---|---|
| KR 20060105956 A | 12-10-2006 | NONE | | |
| WO 2006125039 A | 23-11-2006 | US | 2006261508 A1 | 23-11-2006 |
| US 6077907 A | 20-06-2000 | AT | 294837 T | 15-05-2005 |
| | | CZ | 9802157 A3 | 15-12-1999 |
| | | EP | 0890612 A2 | 13-01-1999 |
| | | ES | 2244023 T3 | 01-12-2005 |
| WO 2006112599 A | 26-10-2006 | NONE | | |
| US 4845169 A | 04-07-1989 | NONE | | |
| WO 0181074 A | 01-11-2001 | AU | 6218901 A | 07-11-2001 |
| US 3639424 A | 01-02-1972 | NONE | | |
| DE 10229298 A1 | 15-01-2004 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1132060 A
- US 3639424 A
- JP 63027550 A
- DE 10229298 A1
- DE 19934377 A1
- WO 00520924 A
- EP 1354901 A1
- EP 1344793 A1

- EP 1702956 A3
- US 5234879 A
- WO 9219653 A
- WO 9219658 A
- WO 9933843 A
- EP 0887379 A1
- WO 9212182 A

### Non-patent literature cited in the description

- *Journal of Polymer materials,* 1992, vol. 9, 235-240

- *Kunststoffe,* 2002, vol. 92, 97-98